# EUROPEAN PATENT APPLICATION

(11) **EP 4 803 970 A1**
(43) Date of publication of application: **09.09.2026**
(21) Application number: 23960857.3
(22) Date of filing: 08.12.2023
(51) Int. Cl.: G05D 1/633, G01C 21/20, G05D 1/223, G05D 1/229, G05D 1/243, G05D 1/43, G05D 1/622, G05D 1/656

(54) **CONTROL DEVICE, CONTROL METHOD, AND PROGRAM**

(71) Applicant: HONDA MOTOR CO., LTD., Tokyo 105-8404 (JP)
(72) Inventor: MATSUZAKI Sango, Wako-shi, Saitama 351-0193 (JP)
(74) Representative: Kiwit, Benedikt
(86) International application number: PCT/JP2023/044028
(87) International publication number: WO 2025/120847

(57) **Abstract**

A control device sets an entry avoidance region around a predicted position around each of one or more pedestrians, sets waypoints for each pedestrian on the basis of the entry avoidance region, selects, on each of left and right sides, a waypoint having a largest azimuth angle as viewed from a mobile object with reference to a direction connecting the mobile object and a destination at a current time point, generates a first path connecting the selected waypoint and the destination, and generates a second path along which the mobile object should travel by adding a waypoint located outside the first path.

## Description

### [Technical Field]

The present invention relates to a control device, a control method, and a program.

### [Background Art]

In recent years, research and practical application have progressed for mobile objects capable of moving within the same space as pedestrians. This type of mobile object autonomously moves by generating a path along which the mobile object does not excessively approach obstacles such as pedestrians. In this regard, an invention regarding avoidance control of a robot using a personal space has been disclosed (Patent Document 1).

### [Citation List]

### [Patent Literature]

Patent Document 1: Japanese Unexamined Patent Application, First Publication No. 2022-13038

### [Summary of Invention]

### [Technical Problem]

The above-described mobile object may move in places where there are pedestrians (floors, sidewalks, open spaces, etc.). Such a place may involve not only a small number of pedestrians but also a relatively large number of pedestrians present simultaneously. In conventional techniques, when there are a plurality of pedestrians, a path cannot be easily generated, and the processing load may increase.

The present invention has been made in consideration of such circumstances, and an objective thereof is to provide a control device, a control method, and a program that enable a path to be easily generated even if there are a plurality of pedestrians and enable the processing load to be reduced.

### Solution to Problem

A control device, a control method, and a program according to the present invention adopt the following configurations.
(1): According to an aspect of the present invention, there is provided a control device for controlling a mobile object that autonomously moves, at least temporarily, in a region where pedestrians walk, the control device including: a recognizer configured to recognize positions of one or more pedestrians in a time series; a destination setter configured to set a destination of the mobile object; a region setter configured to set an entry avoidance region around a predicted position of each of the one or more pedestrians; and a generator configured to set waypoints for each pedestrian on the basis of the entry avoidance region, select, on each of left and right sides, a waypoint having a largest azimuth angle as viewed from the mobile object with reference to a direction connecting the mobile object and the destination at a current time point, generate a first path connecting the selected waypoint and the destination, and generate a second path along which the mobile object should travel by adding a waypoint located outside the first path.
(2): In the above-described aspect (1), the region setter sets the entry avoidance region around a predicted position of each of the one or more pedestrians at a future time point at which the one or more pedestrians are expected to be closest to the mobile object.
(3): In the above-described aspect (1), the generator generates the first path and the second path as geometric curves that smoothly connect a current position of the mobile object, the waypoints, and the destination.
(4): In the above-described aspect (1), the destination setter sets the destination of the mobile object at a position relative to a following target person to be followed by the mobile object.
(5): In the above-described aspect (4), the destination setter sets a plurality of destination candidates when the number of pedestrians recognized by the recognizer is equal to or greater than a predetermined number, and the generator generates the first path and the second path for each of the plurality of destination candidates when the destination setter sets the plurality of destination candidates, and outputs, as a final path, a second path selected on the basis of a predetermined criterion.
(6): In the above-described aspect (1), the destination setter sets the destination of the mobile object at a position set by a user.
(7): In the above-described aspect (1), the destination setter estimates the destination of the mobile object as a destination of a user estimated on the basis of behavior of the user.
(8): In the above-described aspect (1), the region setter sets the entry avoidance region around a predicted position of each of the one or more pedestrians at each future time point.
(9): According to another aspect of the present invention, there is provided a control method to be executed by a control device for controlling a mobile object that autonomously moves, at least temporarily, in a region where pedestrians walk, the control method including: recognizing positions of one or more pedestrians in a time series; setting a destination of the mobile object; setting an entry avoidance region around a predicted position of each of the one or more pedestrians; and setting waypoints for each pedestrian on the basis of the entry avoidance region, selecting, on each of left and right sides, a waypoint having a largest azimuth angle as viewed from the mobile object with reference to a direction connecting the mobile object and the destination at a current time point, generating a first path connecting the selected waypoint and the destination, and generating a second path along which the mobile object should travel by adding a waypoint located outside the first path.
(10): According to yet another aspect of the present invention, there is provided a program for causing a processor of a control device for controlling a mobile object that autonomously moves, at least temporarily, in a region where pedestrians walk to: recognize positions of one or more pedestrians in a time series; set a destination of the mobile object; set an entry avoidance region around a predicted position of each of the one or more pedestrians; and set waypoints for each pedestrian on the basis of the entry avoidance region, select, on each of left and right sides, a waypoint having a largest azimuth angle as viewed from the mobile object with reference to a direction connecting the mobile object and the destination at a current time point, generate a first path connecting the selected waypoint and the destination, and generate a second path along which the mobile object should travel by adding a waypoint located outside the first path.

### [Advantageous Effects of Invention]

According to the aspects (1) to (10), a path can be easily generated even if there are a plurality of pedestrians, and the processing load can be reduced.

### [Brief Description of Drawings]

[FIG. 1] A diagram showing a configuration of a mobile object on which a control device is mounted.
[FIG. 2] A diagram showing an example of a configuration of the control device.
[FIG. 3] A diagram showing a state in which a destination is set.
[FIG. 4] A diagram showing an example of a set entry avoidance region.
[FIG. 5] An explanatory diagram of a process of a waypoint setter.
[FIG. 6] A diagram showing a state in which waypoints are selected.
[FIG. 7] A diagram showing a state in which first paths are generated.
[FIG. 8] A diagram showing a state in which second paths are generated.
[FIG. 9] A diagram showing a state in which a plurality of destination candidates are set.

### [Description of Embodiments]

Hereinafter, embodiments of a control device, a control method, and a program of the present invention will be described with reference to the drawings. The control device of the present invention controls a drive device of a mobile object to move the mobile object. The mobile object in the present invention autonomously moves in a region where pedestrians walk. The region where pedestrians walk includes sidewalks, public open spaces, floors inside buildings, and the like and may include roadways. In the following description, it is assumed that no person gets in or on the mobile object, but a person may get in or on the mobile object.

The mobile object guides a guide target person, follows a following target person, or independently moves toward a destination. The guide target person or the following target person is, for example, one of the pedestrians, but may be a robot or an animal. When the following target person is followed, for example, a position around the following target person is treated as the destination. In the following description, it is assumed that the mobile object moves toward a destination set as a relative position of the following target person. In addition, such operation is not necessarily performed all the time, and may be performed temporarily. For example, when the mobile object is placed in a predetermined state, the control device of the mobile object may execute an algorithm of the present invention to temporarily perform the operation.

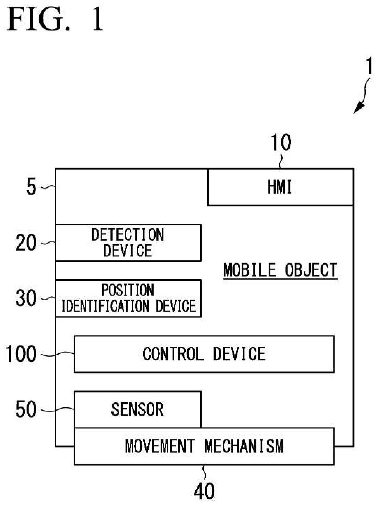

FIG. 1 is a diagram showing a configuration of a mobile object on which the control device is mounted. A mobile object 1 includes, for example, an HMI 10, a detection device 20, a position identification device 30, a body 5 on which a control device 100 is mounted, a movement mechanism 40 attached to the body 5, and a sensor 50 attached to the movement mechanism 40 and the like.

The HMI 10 presents various types of information to a follower F and receives input operations from a user. The HMI 10 includes various display devices, speakers, buzzers, a touch panel, switches, keys, and the like. For example, the HMI 10 receives an input of a destination (a predetermined place, oneself, or the like) by the user.

The detection device 20 is a device that generates data for recognizing an object located around the mobile object 1 and the follower F. The detection device 20 includes, for example, sensors such as cameras, radar devices, light detection and ranging (LIDAR), ultrasonic sensors, and the like, having a detection range around the mobile object 1, an object recognition device that identifies objects by performing a sensor fusion process based on outputs of these sensors, and the like.

The position identification device 30 is a device that identifies the position of the mobile object 1. The position identification device 30 includes, for example, a global navigation satellite system (GNSS) receiver that identifies the position of the own vehicle M based on signals received from GNSS satellites. The position identification device 30 may identify or supplement the position of the mobile object 1 by an inertial navigation system (INS) using an output of the sensor 50 to be described below. Moreover, the position identification device 30 may have a function of receiving electromagnetic waves and may identify or supplement a position of the mobile object 1 on the basis of an intensity of electromagnetic waves arriving from surrounding electromagnetic wave sources (whose positions are known).

The movement mechanism 40 is a mechanism for moving the mobile object 1 including the body 5 in any direction. The movement mechanism 40 includes, for example, a plurality of wheels, a drive motor attached to one or more wheels, and a steering device attached to one or more wheels. There is no particular limitation on the configuration of the movement mechanism 40, and the movement mechanism 40 may include pseudo legs for bipedal walking.

The sensor 50 is a sensor for detecting behavior of the mobile object 1. The sensor 50 includes, for example, a wheel speed sensor for detecting a speed of wheels, an acceleration sensor for detecting acceleration acting on the mobile object 1, a yaw rate sensor attached near a center of gravity of the body 5 in a horizontal direction, a steering angle sensor for detecting a steering angle of steered wheels (steering wheels), an azimuth sensor for detecting an orientation of the mobile object 1 in a horizontal direction, and the like.

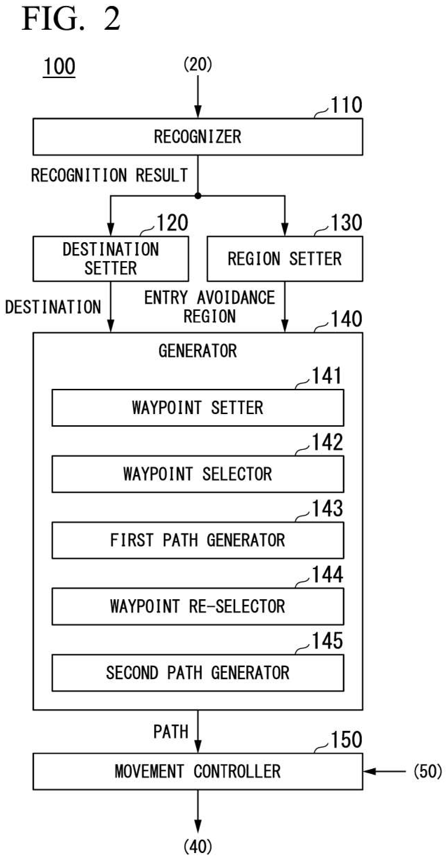

FIG. 2 is a diagram showing an example of a configuration of the control device. The control device 100 includes, for example, a recognizer 110, a destination setter 120, a region setter 130, a generator 140, and a movement controller 150. The generator 140 includes, for example, a waypoint setter 141, a waypoint selector 142, a first path generator 143, a waypoint re-selector 144, and a second path generator 145. These constituent elements are implemented, for example, by a hardware processor such as a central processing unit (CPU) executing a program (software). Some or all of the above constituent elements may be implemented by hardware (including a circuit; circuitry) such as a large-scale integration (LSI) circuit, an application-specific integrated circuit (ASIC), a field-programmable gate array (FPGA), or a graphics processing unit (GPU) or may be implemented by software and hardware in cooperation. The program may be pre-stored in a storage device (a storage device including a non-transitory storage medium) such as a hard disk drive (HDD) or a flash memory or may be stored in a removable storage medium (non-transitory storage medium) such as a DVD or a CD-ROM and installed in the storage device when the storage medium is mounted on a drive device. In addition, the control device 100 may store, in a storage, map information including at least a local map of a place where the mobile object 1 operates.

A process of each part to be described below is iteratively executed (executed in a time series) with each control cycle that occurs at a predetermined interval. Accordingly, until the mobile object 1 reaches the destination, the mobile object 1 does not move along a path generated at a certain time point and the path is updated to a new one due to changes in the surrounding environment or the like, and therefore, control content of the mobile object 1 is updated on the basis of the updated latest path. Hereinafter, it is assumed that a parameter (t) denotes a control cycle (control timing).

The recognizer 110 recognizes objects located around the mobile object 1 in a time series on the basis of information input from the detection device 20. The objects include pedestrians including a guide target person and a following target person when they are present, and static obstacles. The recognizer 110 recognizes states such as a position, velocity, and acceleration of the object. The position of the object is recognized, for example, as a relative position viewed from the mobile object 1, converted into a position on an assumed plane S represented as a two-dimensional plane obtained by viewing a space around the mobile object 1 from above, and used for a subsequent process. In the following description, it is assumed that a position indicates a single point.

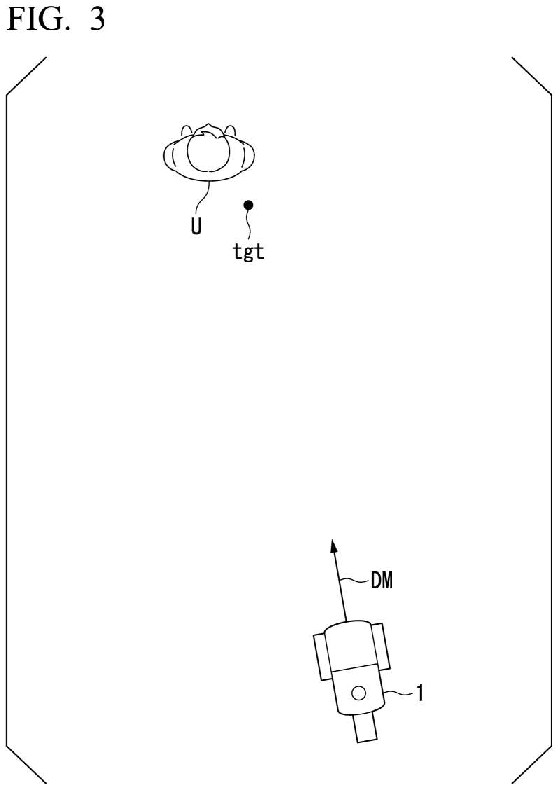

The destination setter 120 sets a destination of the mobile object 1. For example, when there is a following target person, a destination tgt is set at a position relative to the following target person U (for example, directly behind, or diagonally behind and separated from the following target person by approximately several tens of centimeters [cm] to 1 meter [m]). FIG. 3 is a diagram showing a state in which the destination is set. In FIG. 3, DM denotes a movement vector of the mobile object 1. Alternatively, the destination setter 120 may set a fixed position set by a user (a guide target person, a following target person, or another person) as the destination tgt. Moreover, the destination setter 120 may set, as the destination tgt, a destination of the user estimated from behavior of the user. When the destination of the user is estimated, the destination setter 120 may simply estimate the destination from a history of movement vectors of the user, or may analyze a surrounding environment of the user on the basis of outputs of the detection device 20, recognize a position of an object desired to be set as a destination (a store, a counter, or a door) or the like by the user, and estimate the destination of the user by comparing the position with the history of movement vectors of the user. Moreover, when the user periodically moves to the same place, the destination setter 120 may estimate the destination of the user on the basis of the movement history. Moreover, when the user is moving to follow a specific other person, the destination setter 120 may estimate the position of the other person as the position of the user.

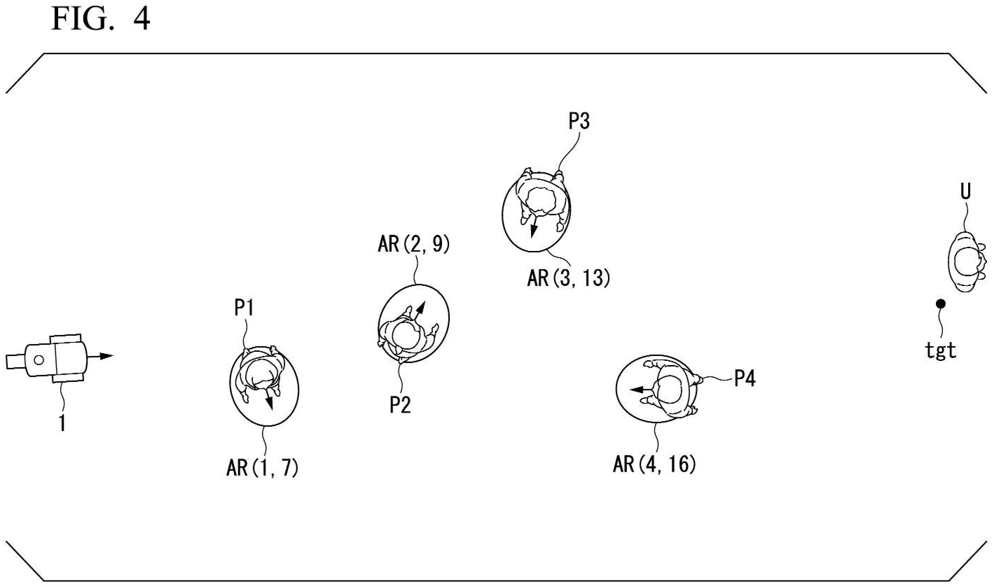

The region setter 130 sets an entry avoidance region AR(i, t) around A predicted position of each of one or more pedestrians Pi. For example, the region setter 130 sets the entry avoidance region AR(i, t) around the predicted position of each of the one or more pedestrians Pi at a future time point at which the one or more pedestrians are expected to be closest to the mobile object 1. Alternatively, the region setter 130 may select any time point from a time period during which the one or more pedestrians are expected to approach the mobile object 1, and may set the entry avoidance region AR(i, t) around the predicted position of each of the one or more pedestrians Pi at that time point, or may set the entry avoidance region AR(i, t) by another method as long as a concept is similar. Here, i denotes identification information of a pedestrian (i = 1, 2, ...). Prior to this, the region setter 130 calculates predicted positions of the one or more pedestrians Pi at respective future time points. For example, the region setter 130 calculates predicted positions of the pedestrians Pi under an assumption that the pedestrians Pi move at a certain speed or certain acceleration while maintaining a current movement direction. Moreover, the region setter 130 may set the entry avoidance region AR(i, t) at each future time point as well as "the future time point at which each of the one or more pedestrians is expected to be closest to the mobile object 1." The entry avoidance region AR(i, t) at each time point is used, for example, to urgently avoid approaching pedestrians according to a rule different from the path generation to be described below. In the following description, it is assumed that the "entry avoidance region" is "the entry avoidance region at a future time point at which each of one or more pedestrians Pi is expected to be closest to the mobile object 1 (under an assumption that the mobile object 1 moves toward the destination tgt at a predetermined speed)." FIG. 4 is a diagram showing an example of the set entry avoidance region. In FIG. 4, arrows attached to the pedestrians Pi indicate movement vectors of the pedestrians Pi. The entry avoidance region AR(i, t) is set to have a shape protruding toward a movement direction side of the pedestrian Pi.

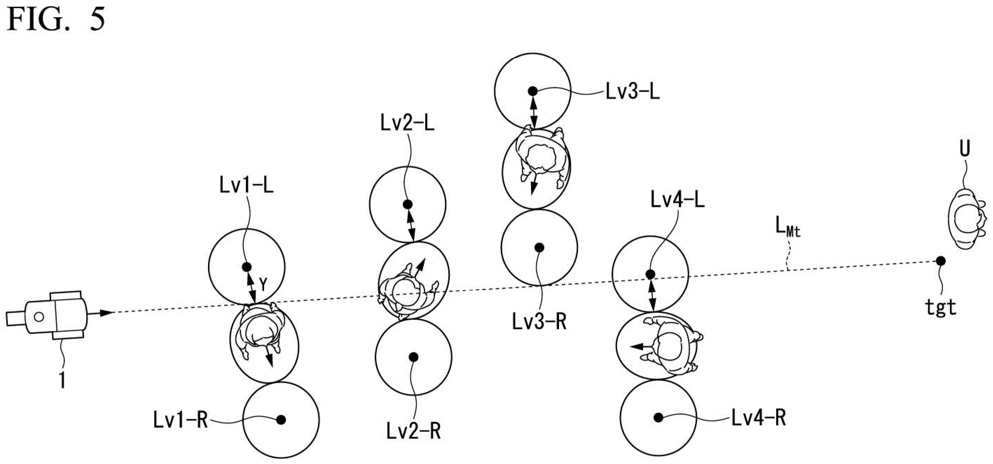

The waypoint setter 141 of the generator 140 sets waypoints for each pedestrian Pi on the basis of the entry avoidance regions AR(i, t). For example, the waypoint setter 141 sets waypoints for each pedestrian Pi along an outer edge of the entry avoidance region AR(i, t). FIG. 5 is an explanatory diagram of a process of the waypoint setter. "Setting along the outer edge" is, for example, setting at positions obtained by offsetting, by a safety margin distance Y of the mobile object 1, two endpoints of the entry avoidance region AR(i, t) in a direction orthogonal to a line segment L_{Mt} connecting the mobile object 1 and the destination tgt. The safety margin distance Y is set to be slightly larger than a radius of the mobile object 1 when viewed from above (or, when not circular, a distance from a center of gravity to a farthest position). In this manner, two waypoints Lvi-L and Lvi-R are set for each pedestrian Pi. L and R after the hyphen indicate which side they are located on as viewed from the mobile object 1.

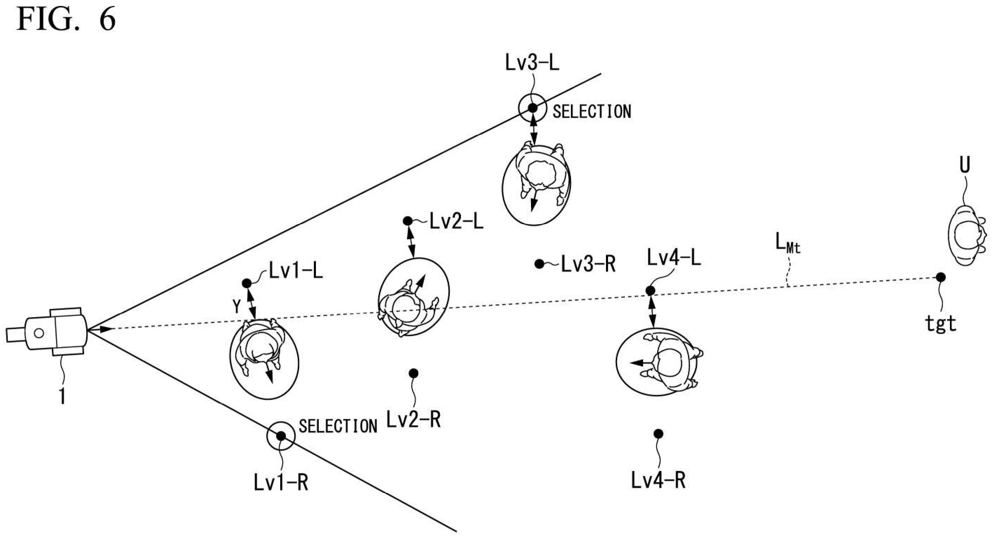

The waypoint selector 142 selects, on each of left and right sides as viewed from the mobile object 1, a waypoint having a largest azimuth angle as viewed from the mobile object 1 with reference to a direction of a line segment L_{Mt} connecting the mobile object 1 and the destination tgt at the current time point. FIG. 6 is a diagram showing a state in which waypoints are selected. In the example shown in FIG. 6, waypoints Lv3-L and Lv1-R are selected.

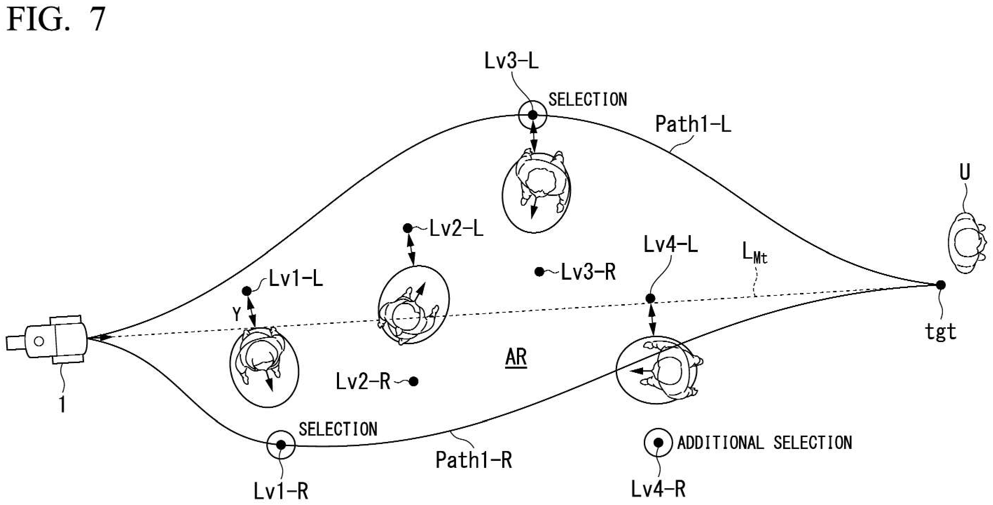

The first path generator 143 generates two first paths Path1-L and Path1-R connecting the selected two waypoints and the destination. FIG. 7 is a diagram showing a state in which the first paths are generated. The first path generator 143 generates the first paths by generating geometric curves such as spline curves that smoothly connect a current position of the mobile object 1, the selected waypoints, and the destination tgt, as input values.

The waypoint re-selector 144 selects a waypoint located outside the first paths. "Outside" indicates a region outside a region AP defined by the two first paths Path1-L and Path1-R. In the example shown in FIG. 7, because only the waypoint Lv4-R is located outside the region AP, the waypoint Lv4-R is selected.

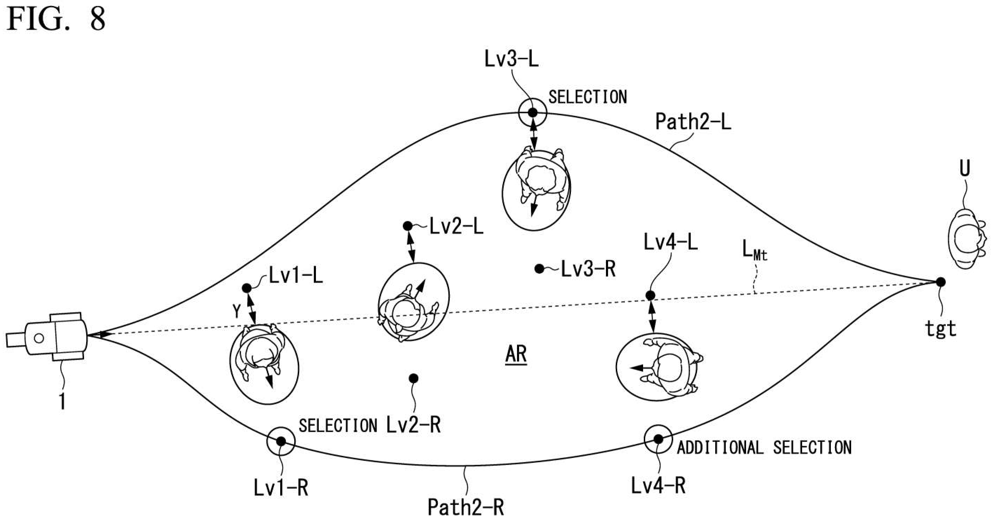

The second path generator 145 generates second paths Path2-L and Path2-R along which the mobile object 1 should travel by adding a waypoint located outside the first paths. FIG. 8 is a diagram showing a state in which the second paths are generated. Like the first path generator 143, the second path generator 145 generates the second paths Path2-L and Path2-R by generating geometric curves such as spline curves that pass through the added waypoint. Also, the second path generator 145 selects one second path having a favorable score obtained by evaluating a path length, a turning angle, and the like. The selected second path or a path obtained by applying processing such as a smoothing process to the second path is output to the movement controller 150 as a path along which the mobile object 1 should travel.

The movement controller 150 controls the movement mechanism 40 so that the mobile object 1 moves along the path. The movement controller 150 controls a drive motor and a steering device so that a position and behavior of the mobile object 1 obtained from outputs of the sensor 50 approach the path.

When the path is generated as described above and the movement of the mobile object 1 is controlled, the mobile object 1 is controlled to travel toward the destination tgt while passing outside a crowded location of pedestrians. Also, because the computation in the control process is simple as described above, the configuration is adopted so that the processing load does not become excessive. Accordingly, even if there are a plurality of pedestrians Pi, a path can be easily generated, and the processing load can be reduced.

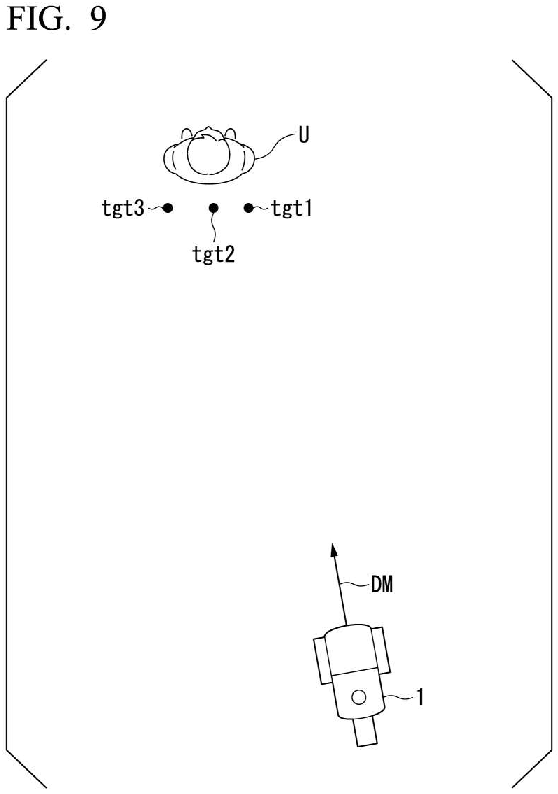

Although it is assumed that only one destination tgt is set in the above description, the destination setter 120 may set a plurality of destination candidates at positions relative to the following target person U when the number of pedestrians recognized by the recognizer 110 is equal to or greater than a predetermined number. FIG. 9 is a diagram showing a state in which a plurality of destination candidates are set. In the example shown in FIG. 9, three destination candidates tgt1 to tgt3 are set. The three destination candidates are set, for example, at positions diagonally behind right, directly behind, and diagonally behind left of the following target person U. In this case, the generator 140 generates the first paths and the second paths for the plurality of destination candidates, and outputs, as a final path, a second path selected based on a predetermined criterion. Because two second paths are generated for each destination candidate, a total of six second paths are generated when there are three destination candidates. Accordingly, the number of options of paths along which the mobile object 1 travels increase, and a more appropriate path can be selected in a crowded situation.

According to the above-described embodiment, even if there are a plurality of pedestrians, a path can be easily generated, and the processing load can be reduced.

The embodiment described above can be represented as follows.

A control device that controls a mobile object that autonomously moves, at least temporarily, in a region where pedestrians walk, comprising:
one or more storage media storing computer-readable instructions; and
a processor connected to the one or more storage media, the processor executing the computer-readable instructions to:
   recognize positions of one or more pedestrians in a time series;
   set a destination of the mobile object;
   set an entry avoidance region around a predicted position of each of the one or more pedestrians;
   set waypoints for each pedestrian on the basis of the entry avoidance region;
   select, on each of left and right sides, a waypoint having a largest azimuth angle as viewed from the mobile object with reference to a direction connecting the mobile object and the destination at a current time point;
   generate a first path connecting the selected waypoint and the destination; and
   generate a second path along which the mobile object should travel by adding a waypoint located outside the first path.

Although modes for carrying out the present invention have been described using embodiments, the present invention is not limited to the embodiments and various modifications and substitutions can also be made without departing from the scope and spirit of the present invention.

### [Reference Signs List]

1 Mobile object
20 Detection device
40 Movement mechanism
100 Control device
110 Recognizer
120 Destination setter
130 Region setter
140 Generator
141 Waypoint setter
142 Waypoint selector
143 First path generator
144 Waypoint re-selector
145 Second path generator
150 Movement controller

## Claims

1. A control device for controlling a mobile object that autonomously moves, at least temporarily, in a region where pedestrians walk, the control device comprising:
a recognizer configured to recognize positions of one or more pedestrians in a time series;
a destination setter configured to set a destination of the mobile object;
a region setter configured to set an entry avoidance region around a predicted position of each of the one or more pedestrians; and
a generator configured to set waypoints for each pedestrian on the basis of the entry avoidance region, select, on each of left and right sides, a waypoint having a largest azimuth angle as viewed from the mobile object with reference to a direction connecting the mobile object and the destination at a current time point, generate a first path connecting the selected waypoint and the destination, and generate a second path along which the mobile object should travel by adding a waypoint located outside the first path.

2. The control device according to claim 1, wherein the region setter sets the entry avoidance region around a predicted position of each of the one or more pedestrians at a future time point at which the one or more pedestrians are expected to be closest to the mobile object.

3. The control device according to claim 1, wherein the generator generates the first path and the second path as geometric curves that smoothly connect a current position of the mobile object, the waypoints, and the destination.

4. The control device according to claim 1, wherein the destination setter sets the destination of the mobile object at a position relative to a following target person to be followed by the mobile object.

5. The control device according to claim 4, wherein
the destination setter sets a plurality of destination candidates when the number of pedestrians recognized by the recognizer is equal to or greater than a predetermined number, and
the generator generates the first path and the second path for each of the plurality of destination candidates when the destination setter sets the plurality of destination candidates, and outputs, as a final path, a second path selected on the basis of a predetermined criterion.

6. The control device according to claim 1, wherein the destination setter sets the destination of the mobile object at a position set by a user.

7. The control device according to claim 1, wherein the destination setter estimates the destination of the mobile object as a destination of a user estimated on the basis of behavior of the user.

8. The control device according to claim 1, wherein the region setter sets the entry avoidance region around a predicted position of each of the one or more pedestrians at each future time point.

9. A control method to be executed by a control device for controlling a mobile object that autonomously moves, at least temporarily, in a region where pedestrians walk, the control method comprising:
recognizing positions of one or more pedestrians in a time series;
setting a destination of the mobile object;
setting an entry avoidance region around a predicted position of each of the one or more pedestrians; and
setting waypoints for each pedestrian on the basis of the entry avoidance region, selecting, on each of left and right sides, a waypoint having a largest azimuth angle as viewed from the mobile object with reference to a direction connecting the mobile object and the destination at a current time point, generating a first path connecting the selected waypoint and the destination, and generating a second path along which the mobile object should travel by adding a waypoint located outside the first path.

10. A program for causing a processor of a control device for controlling a mobile object that autonomously moves, at least temporarily, in a region where pedestrians walk to:
recognize positions of one or more pedestrians in a time series;
set a destination of the mobile object;
set an entry avoidance region around a predicted position of each of the one or more pedestrians; and
set waypoints for each pedestrian on the basis of the entry avoidance region, select, on each of left and right sides, a waypoint having a largest azimuth angle as viewed from the mobile object with reference to a direction connecting the mobile object and the destination at a current time point, generate a first path connecting the selected waypoint and the destination, and generate a second path along which the mobile object should travel by adding a waypoint located outside the first path.
